(19) Europäisches Patentamt
European Patent Office
Office européen des brevets

(11) **EP 2 246 677 B1**

## (12) FASCICULE DE BREVET EUROPEEN

(45) Date de publication et mention
de la délivrance du brevet:
**11.05.2011 Bulletin 2011/19**

(51) Int Cl.:
**G01J 5/10** *(2006.01)* **G01J 5/20** *(2006.01)*
**G01J 5/08** *(2006.01)*

(21) Numéro de dépôt: **10305323.7**

(22) Date de dépôt: **30.03.2010**

(54) **Détecteur bolométrique d'un rayonnement électromagnétique dans le domaine s'étendant de l'infrarouge au térahertz et dispositif de détection matriciel comportant de tels détecteurs**

Bolometrischer Detektor für elektromagnetische Strahlung im Spektralbereich von Infrarot bis Terahertz und Detektoranordnung mit solchen Detektoren.

Bolometric detector of electromagnetic radiation from the infrared to the terahertz spectral domain and detector array device comprising said detectors.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.04.2009 FR 0952862**

(43) Date de publication de la demande:
**03.11.2010 Bulletin 2010/44**

(73) Titulaire: **Commissariat à l'Énergie Atomique et aux Énergies Alternatives**
**75015 Paris (FR)**

(72) Inventeur: **Ouvrier-Buffet, Jean-Louis**
**74320 SEVRIER (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**US-B1- 6 329 649    US-B1- 6 329 655**

• **PEYTAVIT E ET AL: "Room Temperature Terahertz Microbolometers" INFRARED AND MILLIMETER WAVES AND 13TH INTERNATIONAL CONFERENCE ON TER AHERTZ ELECTRONICS, 2005. IRMMW-THZ 2005. THE JOINT 30TH INTERNATIONAL CONFERENCE ON WILLIAMSBURG, VA, USA 19-23 SEPT. 2005, PISCATAWAY, NJ, USA,IEEE, vol. 1, 19 septembre 2005 (2005-09-19), pages 257-258, XP010875024 ISBN: 978-0-7803-9348-6**

## Description

## DOMAINE DE L'INVENTION

La présente invention a trait au domaine des détecteurs bolométriques à antenne, et plus particulièrement aux détecteurs à antennes papillons croisées destinés à la détection d'un rayonnement électromagnétique dans la gamme s'étendant de l'infrarouge, et notamment dans les bandes 3 - 5 $\mu$m et 8 - 14 $\mu$m, au térahertz.

La détection dans la gamme infrarouge présentent de nombreuses applications, largement connues à ce jour. S'agissant du térahertz, c'est-à-dire dans la gamme de fréquences comprise entre 100 gigahertz et 10 térahertz, les applications envisagées de façon non limitative, concernent.

■ le diagnostic médical, pour lequel la détection dans le térahertz autorise l'accès à des détails de structures anatomiques et les réactions chimiques qui s'y produisent, que ne fournissent ni les rayons X ni les ultra-sons ;

■ le domaine militaire et la sécurité aérienne, avec par exemple la réalisation de radars anti-furtivité ou de radars haute résolution permettant de faire de la discrimination ;

■ l'étude et la détection de la pollution atmosphérique, l'observation en ondes submillimétriques fournissant en effet des informations importantes sur la chimie atmosphérique et permettant ainsi un suivi inégalé des polluants atmosphériques comme par exemple le trioxyde d'azote qui est difficilement détectable par les techniques classiques car présentant de fortes raies d'absorption dans l'infrarouge lointain ;

■ l'identification d'espèces chimiques, de nombreux composés chimiques complexes ayant une signature dans la gamme terahertz suffisamment univoque pour permettre leur détection de manière certaine, comme par exemple certains explosifs et produits toxiques, certains composés issus de la maturation des fruits ou encore certains composés issus de la combustion industrielle ;

■ l'analyse de phénomènes moléculaires ou atomiques, la spectroscopie térahertz permettant d'obtenir de nouvelles informations sur des mécanismes comme la photoexcitation, la photodissociation et la solvatation. Il en va de même pour l'analyse d'interactions moléculaires (états vibratoires des molécules ou des liaisons hydrogènes par exemple), de systèmes à phase condensée, de processus dynamiques dans des grosses molécules telles que les peptides et les protéines ou encore l'observation de l'orientation des polymères avec une technique basée sur le rayonnement térahertz ;

■ l'étude des propriétés des matériaux, comme les semi-conducteurs, pour déterminer de manière non destructive par exemple leur mobilité, la dynamique de porteurs ultra-rapides et les interactions porteurs-phonons, les supraconducteurs, les polymères, les céramiques, les matériaux organiques et les matériaux poreux. De plus, dans la gamme térahertz, des matériaux tels que les plastiques, le papier et les textiles sont transparents, les métaux sont de parfaits réflecteurs et l'eau possède un grand pouvoir absorbant. Ainsi, la détection dans cette gamme est particulièrement adaptée à l'inspection de produits emballés ou au contrôle de procédés de fabrication in situ et en temps réel par exemple ; et

■ la télécommunication large bande, la course à des débits d'information toujours plus élevés, autant sur terre qu'entres satellites, poussant les industriels à développer des systèmes fonctionnant à des fréquences qui atteignent aujourd'hui plusieurs centaines de gigahertz et demain plusieurs térahertz.

## ETAT DE LA TECHNIQUE

Usuellement, un détecteur bolométrique résistif mesure la puissance d'un rayonnement incident dans la gamme infrarouge et comprend à cet effet un élément bolométrique résistif absorbant qui convertit le flux lumineux en flux calorifique, ce qui produit une élévation de température dudit élément par rapport à une température de référence. Cette augmentation de température induit alors une variation de la résistance électrique de l'élément absorbant, provoquant des variations de tension ou de courant aux bornes de celui-ci. Ces variations électriques constituent le signal délivré par le capteur.

Toutefois, la température de l'élément absorbant est usuellement dépendante en grande partie de l'environnement de celui-ci, et notamment celle du substrat qui comprend le circuit électronique de lecture. Afin d'insensibiliser au maximum l'élément absorbant de son environnement, et ainsi augmenter la sensibilité du détecteur, l'élément absorbant est généralement isolé thermiquement du substrat.

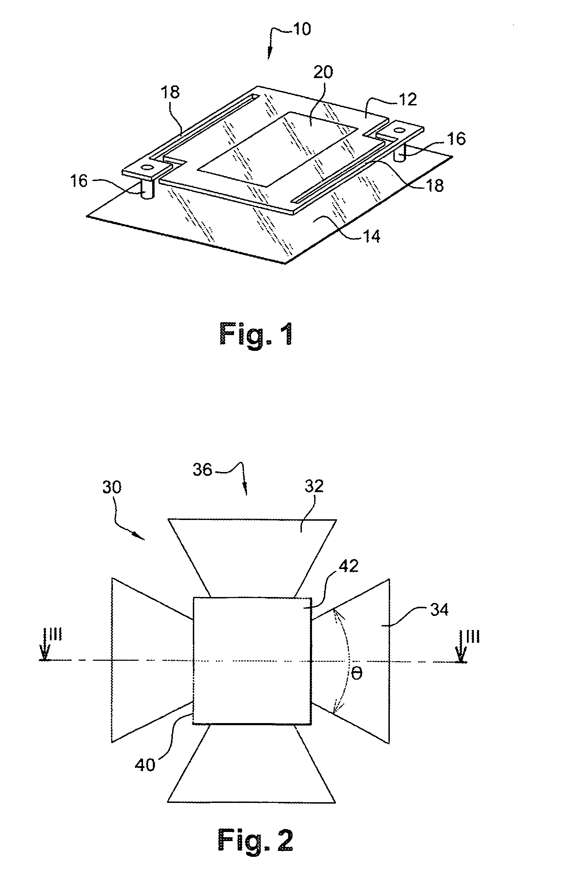

La figure 1 est une vue schématique en perspective d'un détecteur bolométrique résistif élémentaire **10** de l'état de la technique illustrant ce principe d'isolation thermique. Ce détecteur élémentaire, ici sous la forme d'une membrane suspendue, fait classiquement partie d'une matrice de détecteurs élémentaires à une ou deux dimensions.

Le détecteur **10** comporte une fine membrane **12** absorbant le rayonnement incident, suspendue au dessus d'un substrat - support **14** par l'intermédiaire de deux clous d'ancrage conducteurs **16** auxquels elle est fixée par deux bras d'isolation thermique **18**. La membrane **12** comprend usuellement une couche d'isolant électrique, comme par exemple du $SiO_2$, du SiO, du SiN, du ZnS ou autres, qui assure la rigidité mécanique de la membrane **12**, ainsi qu'une couche métallique d'interconnexion électrique déposée sur la couche d'isolant.

Une couche **20** mince de matériau thermométrique résistif est par ailleurs déposée au centre de la membrane **12** sur la couche métallique d'interconnexion, notamment une couche en un matériau semi-conducteur, tel que du silicium polycristallin ou amorphe de type p ou n faiblement ou fortement résistif, ou bien un oxyde de vanadium ($V_2O_5$, $VO_2$) élaboré dans une phase semi-conductrice.

Enfin, le substrat - support **14** comprend un circuit électronique intégré sur une plaquette de silicium, usuellement connu sous l'expression « circuit de lecture ». Le circuit de lecture comporte d'une part les éléments de stimuli et de lecture de l'élément thermométrique **20,** et d'autre part les composants de multiplexage qui permettent de sérialiser les signaux issus des différents éléments thermométriques présents dans le détecteur matriciel.

En fonctionnement, la membrane **12** s'échauffe sous l'effet d'un rayonnement électromagnétique incident et la puissance calorifique produite est transmise à la couche **20** de matériau thermométrique. Périodiquement, le circuit de lecture agencé dans le substrat **14** polarise la membrane **12** en soumettant les clous **16** à une tension de polarisation et recueille le courant circulant dans l'élément thermométrique **20** pour en déduire une variation de sa résistance et donc le rayonnement incident à l'origine de ladite variation.

L'agencement et le fonctionnement d'un tel détecteur étant classique, il ne sera pas expliqué plus en détail pour des raisons de concision. Il doit cependant être noté que la membrane **12** remplit, outre la fonction d'isolation thermique, trois fonctions principales : celle d'antenne pour la réception du rayonnement, celle de conversion de la puissance électromagnétique réceptionnée en puissance calorifique et celle de mesure thermométrique de la puissance calorifique produite. Remplissant le rôle d'antenne, les dimensions de la membrane **12** sont en conséquence sélectionnées pour être du même ordre de grandeur que la longueur d'onde du rayonnement destiné à être mesuré.

Or, dans le domaine du térahertz, les longueurs d'onde peuvent atteindre le millimètre, ce qui nécessite donc une membrane du même ordre de grandeur. Toutefois, pour de telles dimensions, la masse calorifique, la tenue mécanique et les pertes par rayonnement de la membrane sont si problématiques qu'elles nuisent in fine à l'efficacité du détecteur.

C'est pourquoi, pour une telle gamme de fréquences, la fonction de réception du rayonnement est découplée des autres fonctions. La fonction de réception est ainsi assurée par une antenne plane et la fonction de conversion de la puissance électromagnétique en puissance calorifique est quant à elle assurée par la charge résistive de l'antenne. Les dimensions de la charge satisfont classiquement aux conditions d'adaptation d'impédance qui dépendent de la géométrie de l'antenne et de la nature des couches la supportant afin d'obtenir une conversion optimale. La charge résistive est par ailleurs en contact thermique avec un élément thermométrique pour la mesure de la puissance calorifique produite. L'ensemble constitue alors un bolomètre à antenne.

Dans une telle configuration, l'élément thermométrique est indépendant de l'antenne et sa taille ne dépend plus alors de la longueur d'onde incidente mais de facteurs déterminant les performances intrinsèques du détecteur (sensibilité, rapport signal sur bruit, etc...), en adéquation avec les exigences de l'application visée, par exemple de l'imagerie active ou de l'imagerie passive.

Par ailleurs, dans la plupart des cas, le rayonnement électromagnétique incident n'est pas polarisé, de sorte que sa réception par une seule antenne ne permet pas de capter la totalité de la puissance électromagnétique. Toutefois, un rayonnement non polarisé peut être considéré comme la superposition de deux composantes polarisées linéairement dans deux directions orthogonales, chacune de ces composantes transportant la moitié de l'énergie de l'onde. Comme cela est connu en soi, une manière efficace de capter un rayonnement électromagnétique incident est d'utiliser deux antennes papillons croisées. L'antenne papillon est mieux connue sous l'expression anglo-saxonne « *bow-tie* », et est explicitée par exemple sur la thèse de R. PEREZ, consultable sur le site suivant : http://www.unilim.fr/theses/ 2005/sciences/2005limo0053/perez_r.pdf.

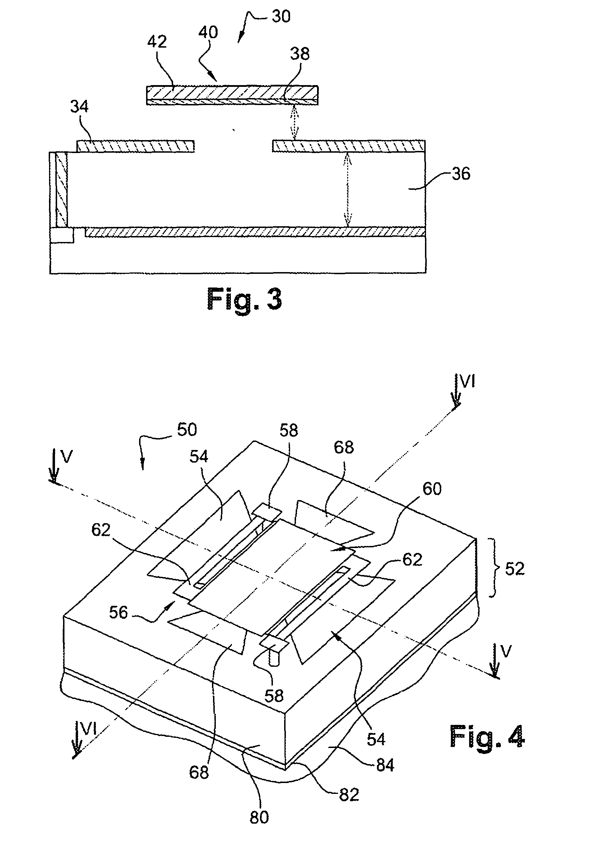

Le document US 6 329 655 décrit un bolomètre à antenne **30,** fonctionnant dans la gamme millimétrique et muni de deux antennes papillons croisées **32, 34,** dont des vues schématiques de dessus et en section sont représentées aux figures 2 et 3 respectivement. Le principe du bolomètre **30** repose sur le couplage capacitif réalisé entre les antennes **32, 34,** disposées sur un substrat - support **36,** et une charge résistive **38,** agencée dans une membrane suspendue **40** et sur laquelle est disposée un élément thermométrique **42** (figure 3).

La charge résistive **38,** qui prend la forme d'une couche carrée agencée au centre des antennes **32, 34,** présente en effet une surface en regard de celles-ci et forme donc avec les antennes une capacité. Le rayonnement capté par les antennes **32, 34** est ainsi transmis à la charge **38** par couplage capacitif.

Toutefois la forme de la charge résistive pose des problèmes d'adaptation d'impédance.

On estime en effet que l'adaptation d'impédance, et donc le couplage capacitif, est optimale pour cette charge lorsque la relation suivante est satisfaite :

$$\sqrt{\left(\frac{1}{\pi.f.C}\right)^2 + (R.C)^2} \approx 100\Omega$$

où f est la fréquence du rayonnement, C est la valeur de la capacité formée entre les antennes **32, 34** et la charge résistive **38,** et R est la valeur de la résistance de la charge résistive **38.**

Augmenter la valeur de la capacité C pour réaliser une adaptation d'impédance ou un couplage optimum est inadapté puisque cela suppose soit un espace submicronique entre les antennes **32, 34** et la charge **38,** soit une grande surface de recouvrement entre celles-ci.

Réduire la distance entre les antennes et la charge à une valeur comprise entre 100 et 200 nanomètres présente cependant des difficultés liées autant aux phénomènes physiques (effet Casimir pour la stabilité mécanique, échange radiatif important conduisant à une dégradation des l'isolation thermique de l'élément thermométrique et donc à une baisse de la sensibilité du détecteur) qu'aux techniques actuelles de fabrication (maîtrise des contraintes résiduelles des couches pour éviter les contacts non désirés ou encore maîtrise des couches sacrificielles utilisées pour former l'espace entre les antennes et la charge résistive).

Par ailleurs, augmenter la taille de la charge résistive pour augmenter les surfaces en regard présente les mêmes problèmes que ceux ayant menés au découplage entre la fonction de réception et les fonctions de conversion et de thermométrie précédemment évoqués. Par conséquent, pour une adaptation au térahertz, la valeur de la capacité C n'est pas libre.

Dans une telle configuration, la charge résistive **38** doit être faiblement résistive, à savoir une résistance carrée de 50Ω à 200Ω, de manière à assurer un couplage optimum avec un rayonnement térahertz. Il en résulte alors par construction un couplage non désiré, quasiment optimum, avec le rayonnement infrarouge émis par des corps à 300°K et très difficile à éliminer efficacement sans dégrader la qualité du signal dans la gamme des fréquences térahertz.

De fait, il est difficile d'obtenir avec une charge résistive, associée aux deux antennes et présentant une forme carrée au centre du détecteur, une adaptation d'impédance et un couplage capacitif optimaux, à moins de rendre également optimal le couplage du détecteur avec le rayonnement infrarouge.

Par ailleurs, les deux antennes **32, 34** étant toutes deux disposées sur le substrat **36,** elles sont couplées via celui-ci. On observe ainsi que le gain du détecteur est sensiblement réduit, conduisant à une utilisation peu satisfaisante de celui-ci. Pour des raisons de connexion électrique, notamment de facilité de fabrication des reprises de contact entre le circuit de lecture agencé dans le substrat et l'élément thermométrique de la membrane, le substrat présente usuellement une épaisseur la plus faible possible. Cependant, comme cette épaisseur e doit vérifier la relation e = λ/4n avec $n = \sqrt{\varepsilon}$ , la permittivité ε sera très élevée, ce qui augmentera le couplage des deux antennes croisées. Ainsi, il n'est pas possible de réduire le découplage entre les antennes en choisissant le substrat en conséquence, sans par ailleurs modifier de manière importante l'agencement et le fonctionnement des éléments électroniques intégrés dans celui-ci.

Les documents US 6329649 et Peytavit et al, The Joint 30th International Conference on Infrared and Milimeter Waves & 13th Intl. Conf. on Terahertz Electronics, Vol. 1, 19 Sep. 2005, pages 257-258 divulguent, des détecteurs bolométriques à antenne.

## EXPOSE DE L'INVENTION

Le but de la présente invention est de proposer un détecteur bolométrique résistif à double antennes papillon croisées ne présentant pas de couplage entre les antennes.

A cet effet, l'invention a pour objet un détecteur bolométrique d'un rayonnement électromagnétique dans le domaine s'étendant de l'infrarouge au térahertz, comportant :

■ une première et une seconde antennes papillon croisées, destinées à collecter le rayonnement électromagnétique ;
■ une charge résistive couplée auxdites antennes pour convertir la puissance électromagnétique collectée en puissance calorifique ;
■ un micropont bolométrique suspendu au dessus d'un substrat par des bras de soutien et d'isolation thermique, le micropont comprenant :

o la charge résistive ;
o un élément bolométrique ou thermométrique couplé à la charge résistive pour s'échauffer sous l'effet de la puissance calorifique produite.

Selon l'invention, la première antenne est agencée hors du micropont et en couplage capacitif avec la charge résistive, et la seconde antenne est agencée dans le micropont en couplage résistif avec la charge.

Par « micropont », on entend ici la structure suspendue au dessus du substrat et qui comprend donc notamment la membrane bolométrique et la seconde antenne.

En d'autres termes, les antennes sont séparées l'une de l'autre par le vide entre le micropont et le substrat de sorte qu'il existe un couplage réduit entre elles, notamment via un matériau.

Selon un mode de réalisation privilégié de l'invention, la charge résistive comporte un film métallique, et le micropont comprend des ailettes agencées en regard de la première antenne sur ce film métallique de façon à réaliser une adaptation d'impédance entre la première antenne et le film métallique. De préférence, les ailettes prennent une forme analogue aux parties centrales de la première antenne. Notamment, les ailettes sont recouvertes d'un isolant électrique et l'élément bolométrique est au moins partiellement agencé sur ledit isolant et au moins partiellement au contact du film métallique.

En d'autres termes, les ailettes sont conçues en dimension, forme et matériau pour réaliser une adaptation d'impédance, optimale avec la première antenne, et cela indépendamment de la seconde antenne.

Ainsi, au contraire de l'état de la technique où la charge résistive d'une antenne réalise à la fois l'adaptation d'impédance et la conversion de la puissance électromagnétique, et cela pour les deux antennes, il est prévu selon l'invention des éléments supplémentaires dédiés à l'adaptation d'impédance de la première antenne. Ayant découplé ainsi au moins partiellement la fonction d'adaptation d'impédance de la fonction de conversion, il existe un degré de liberté supplémentaire pour choisir l'élément résistif plaqué contre les ailettes également en charge de la conversion de la puissance électromagnétique, qui est par exemple le film métallique usuellement présent dans le micropont pour la connexion électrique de l'élément thermométrique sur lequel repose par exemple la seconde antenne.

Selon un mode de réalisation selon l'invention, la charge résistive comporte une couche métallique et la seconde antenne est agencée au moins partiellement sur ce film métallique ou couche métallique, par exemple, celui usuellement présent pour la connexion électrique de l'élément thermométrique avec le circuit de lecture.

En d'autres termes, le film résistif remplit ici la fonction de conversion pour la puissance électromagnétique reçue par la seconde antenne, et cela indépendamment des ailettes et de la première antenne.

Selon un mode de réalisation de l'invention, la première antenne est agencée sur le substrat.

Selon un mode de réalisation de l'invention, la première antenne est formée au moins partiellement au dessus du micropont. La première antenne forme ainsi un écran pour l'élément thermométrique, ce qui limite l'absorption des rayonnements parasites.

L'invention a également pour objet un dispositif de détection matriciel d'un rayonnement électromagnétique dans le domaine s'étendant de l'infrarouge au térahertz, qui, selon l'invention, comporte une matrice à une ou deux dimensions de détecteurs bolométriques du type susmentionné.

**BREVE DESCRIPTION DES FIGURES**

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

■ la figure 1 est une vue schématique en perspective d'un détecteur bolométrique élémentaire de l'état de la technique, déjà décrit ci-dessus;
■ les figures 2 et 3 sont des vues schématiques de dessus et en coupe d'un détecteur bolométrique à antennes selon l'état de la technique, déjà décrit ci-dessus ;
■ la figure 4 est une vue schématique en perspective d'un premier mode de réalisation d'un détecteur bolométrique selon l'invention ;

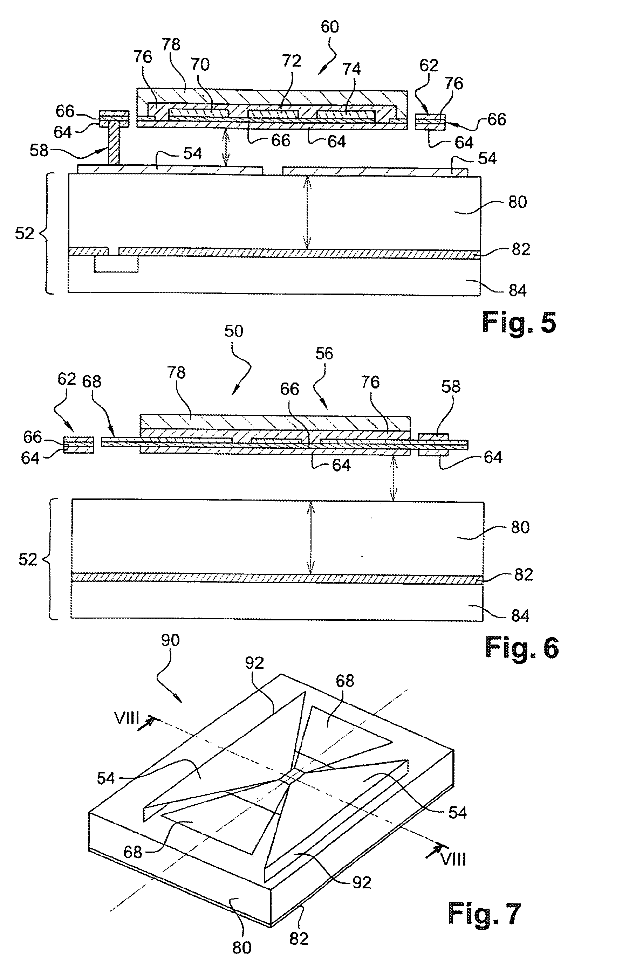

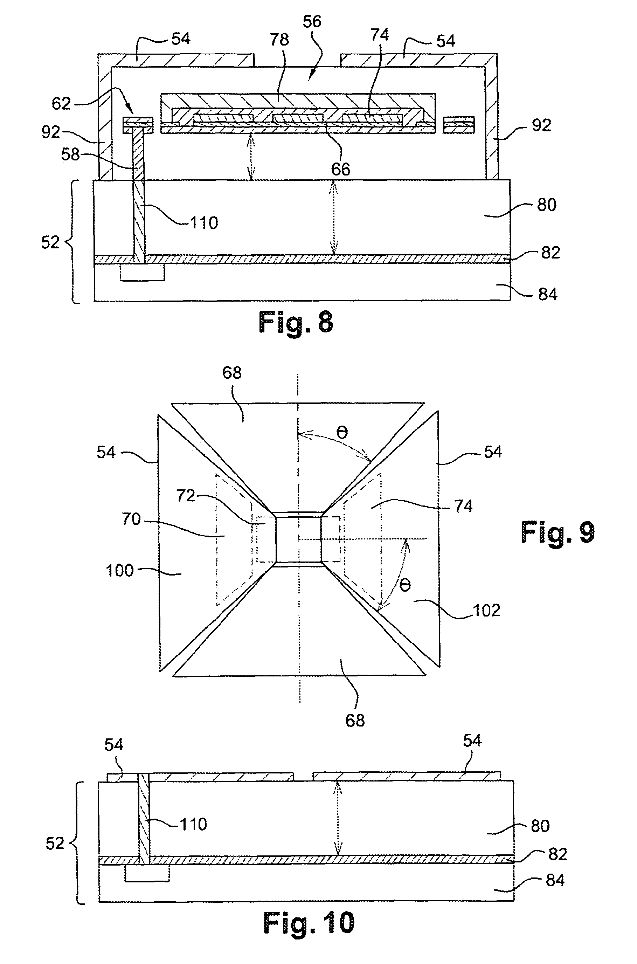

■ les figures 5 et 6 sont des vues en section du détecteur selon le premier mode de réalisation, respectivement selon les plans V-V et VI-VI de la figure 4 ;
■ la figure 7 est une vue schématique en perspective d'un deuxième mode de réalisation d'un détecteur bolométrique selon l'invention ;
■ la figure 8 est une vue schématique en section du détecteur selon le deuxième mode de réalisation selon le plan VIII-VIII de la figure 7 ;
■ la figure 9 est une vue schématique de dessus illustrant les ailettes d'adaptation d'impédance entrant dans la constitution du premier mode de réalisation ;
■ les figures 10 à 13 sont des vues schématiques en coupe illustrant un procédé de fabrication d'un détecteur selon l'invention.

**DESCRIPTION DETAILLEE DE L'INVENTION**

Il va à présent être décrit, en relation avec les figures 4 à 7, un détecteur bolométrique élémentaire **50** selon un premier mode de réalisation de l'invention, constitutif d'une matrice de détecteurs élémentaires.

Le bolomètre **50** comporte un substrat isolant **52** sur lequel est déposée une première antenne papillon **54** plane réalisée en matériau conducteur, ainsi qu'un micropont **56,** suspendu au dessus du substrat **52** par deux clous d'ancrage conducteurs **58.**

Le micropont **56** est formé d'une partie centrale **60** et de deux bras d'isolation thermique **62** raccordant la partie centrale **60** aux clous d'ancrage **58** et perpendiculaires à l'axe principal (V-V) de la première antenne **54.** Le micropont **56** comporte une première couche d'isolant électrique **64,** ainsi qu'une couche conductrice **66,** et plus particulièrement un film métallique, déposée sur la couche d'isolant **64.**

Une seconde antenne **68** papillon en matériau conducteur, croisée avec la première antenne **54** et d'axe principal (VI-VI) parallèle aux bras d'isolation thermique **62,** est par ailleurs formée sur la couche conductrice **66** du micropont **56** et s'étend de part et d'autre de la partie centrale **60.** La seconde antenne papillon **68** est ainsi en couplage résistif avec la couche conductrice **66.**

Des ailettes **70, 72, 74,** réalisée dans le même matériau que les antennes **54, 68,** sont également prévues sur la couche conductrice **66** avec des surfaces en regard de la première antenne papillon **54.** Les ailettes **70, 72, 74** sont ainsi en couplage capacitif avec l'antenne **54** et sont par ailleurs choisies pour réaliser une adaptation d'impédance avec celle-ci d'une manière qui sera expliquée plus en détail par la suite.

Les ailettes **70, 72, 74,** ainsi que la portion de la seconde antenne papillon **68** agencée dans la partie centrale **60,** sont recouvertes d'une couche d'isolant **76** pour les isoler électriquement, une partie de la couche conductrice **66** étant laissée libre.

Une couche de matériau thermométrique **78** est par ailleurs déposée sur la couche d'isolant **76** en contact de la couche conductrice **66** au niveau de la partie de celle-ci laissée libre par la couche d'isolant **76.**

Enfin, le substrat **52** comporte une couche isolante **80,** présentant un faible coefficient d'absorption dans la gamme de longueurs d'onde de fonctionnement du détecteur, et un réflecteur **82,** la couche **80** et le réflecteur **82** formant une cavité résonnante pour les antennes **54, 68** dans la gamme de fréquences d'intérêt. Une couche fonctionnelle **84** comprenant les circuits de lecture du détecteur est enfin prévue sous le réflecteur **82.**

Les figures 7 et 8 sont des vues schématiques en perspective et en section d'un second mode de réalisation selon l'invention. Ce second mode de réalisation diffère du premier mode de réalisation par l'emplacement de la première antenne **54.** Celle-ci est disposée au dessus du micropont **56** au moyen d'une structure de soutien **92,** plutôt que disposée sur le substrat **52.** Ceci permet notamment de former un écran pour l'élément thermométrique **78,** limitant l'absorption des rayonnements parasites.

Plus particulièrement, la première antenne **54** forme un écran au-dessus des bras d'isolation thermique **62,** des clous d'ancrage **58** et des contacts entre l'élément thermométrique **78** et la couche conductrice **66,** ce qui est particulièrement avantageux dans la mesure où ces éléments présentent usuellement des caractéristiques de résistance sensibles au rayonnement infrarouge situé dans la bande de fréquences 8μm-14μm.

On notera que la charge résistive des antennes **54, 68** est définie par cette couche conductrice **66,** et en particulier par les zones découvertes de cette couche.

En fonctionnement, un rayonnement électromagnétique est capté par les antennes papillons **54, 68.** La puissance électromagnétique captée par la première antenne **54** est alors transmise aux ailettes **70, 72, 74** par couplage capacitif. La puissance électromagnétique transmise aux ailettes **70, 72, 74** est alors convertie en chaleur par la couche conductrice **66** sur laquelle les ailettes sont formées.

La puissance électromagnétique captée par la seconde antenne **68** est quant à elle directement convertie par cette couche conductrice **66** sur laquelle elle repose. L'élément thermométrique **78,** qui est au contact de la couche conductrice **66,** subit alors en raison dudit contact, un échauffement et voit ainsi sa résistance modifiée. La couche conductrice **66,** qui remplit également la fonction d'électrode de polarisation de l'élément thermométrique **78,** est alors régulièrement polarisée pour soumettre l'élément thermométrique **78** à une tension de polarisation et faire ainsi circuler un courant dans celui-ci de manière à connaître sa variation de résistance, comme cela est connu en soi.

La figure 9 illustre schématiquement en vue de dessus les première et seconde antennes papillons **54, 68,** ainsi que les ailettes **70, 72, 74.** Comme cela est visible, une première ailette centrale **72,** de forme rectangulaire, est à cheval sur les deux ailes **100, 102** de l'antenne papillon **54,** et deux ailettes latérales **70, 74** sont respectivement en regard des parties **100, 102** de la première antenne **54.** De préférence, les ailettes latérales **70, 74** sont sensiblement de forme et de dimension identiques à une partie de l'antenne **54.** Les ailettes ont une forme trapézoïdale équivalente à la partie trapézoïdale de l'antenne située en regard. Sa surface correspond avantageusement à la capacité C nécessaire à l'adaptation d'impédance. Ainsi, il est obtenu une adaptation d'impédance optimale.

En outre, la charge résistive des antennes, définies par les portions de la couche conductrice **66** situées entre les ailettes **70, 72, 74** et entre les parties de la seconde antenne **68,** est de surface réduite. Cette surface étant réduite, le couplage du détecteur selon l'invention avec le rayonnement infrarouge, qui est en première approximation proportionnel à la taille de la charge résistive, est donc également réduit.

Par ailleurs, la longueur des antennes **54, 68** et des ailettes, de même que leur angle d'ouverture θ sont choisies de manière à accroitre ou à réduire la bande passante du détecteur.

Il va à présent être décrit en relation avec les figures 10 à 12 un procédé de fabrication du détecteur selon le premier mode de réalisation selon l'invention.

Comme illustré à la figure 10, la cavité **80, 82** du détecteur est formée d'un réflecteur **82,** disposé sur le circuit de lecture **84,** comme par exemple une couche d'aluminium, et d'une couche **80** de matériau isolant, présentant un coefficient d'absorption le plus faible possible dans la gamme de longueurs d'onde de fonctionnement du détecteur. Par exemple, la couche **80** est constituée de SiO, de $SiO_2$, de SiN, de $Ta_2O_5$, de $Ta_2O_5$-$TiO_2$, de $HfO_2$, de $SrTiO_3$, de $Ba_{1-x}Sr_xTiO_3$ ou d'un mélange de ceux-ci.

La couche **80** a par ailleurs une épaisseur de 1μm à 500 μm, réglée à la valeur :

$$\lambda/(4n)$$

où :

■ λ est une longueur d'onde de la gamme de fonctionnement du détecteur, par exemple la longueur d'onde centrale de cette gamme ; et

■ $n = \sqrt{\varepsilon}$, ε étant la permittivité diélectrique du matériau constitutif de la couche **80.**

Une cavité résonnante est ainsi obtenue pour le rayonnement térahertz objet de la détection.

La couche **80** est par ailleurs traversée par des connexions électriques **110,** par exemple dans le prolongement des clous d'ancrage **58,** de manière à relier électriquement le circuit de lecture **84** et l'élément thermométrique **78.** Par exemple, des vias sont réalisés dans la couche **80** selon une technique usuelle, et les vias ainsi produits sont comblés par un métal comme le tungstène, l'aluminium ou le cuivre au moyen d'une technologie damascène associée à une technique de planarisation.

La première antenne **54,** en matériau conducteur comme l'aluminium, le siliciure de tungstène, le titane ou autres, est quant à elle formée sur la couche **80** par une technique usuelle de photolithographie et présente une épaisseur comprise entre 0,1μm à 0,5μm.

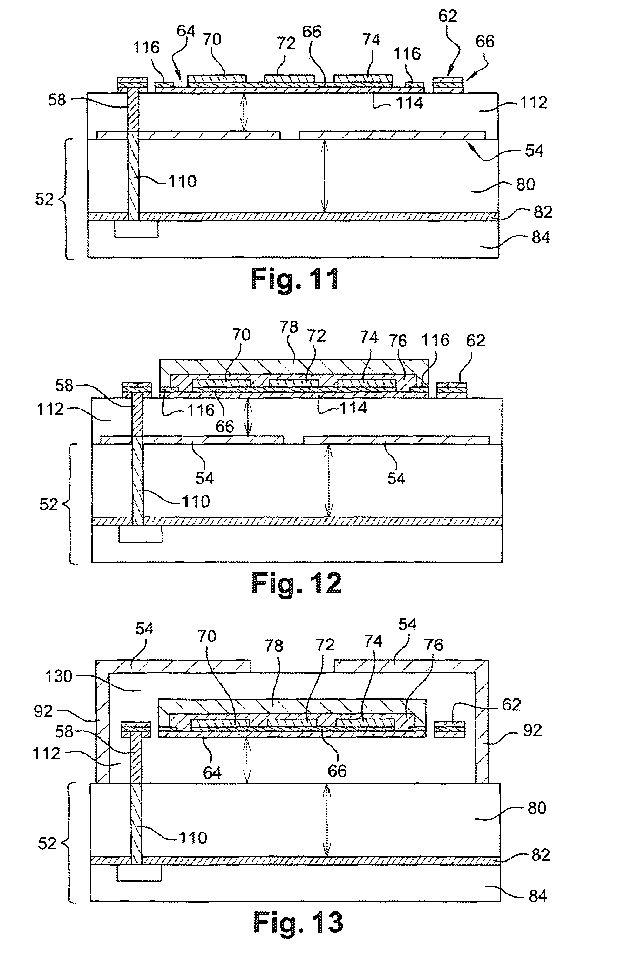

Une fois le substrat **52** et la première antenne **54** fabriqués, une couche sacrificielle **112** (figure 11), par exemple en polyimide, d'épaisseur comprise entre 0,5μm et 5μm est formée sur l'antenne **54** et la couche **80.** L'épaisseur de la couche sacrificielle est choisie pour réaliser un couplage capacitif performant entre la première antenne **54** déposée sur le substrat **52** et les ailettes **70, 72, 74** qui seront ultérieurement formées. Cette épaisseur est choisie la plus faible possible tout en étant compatible avec la tenue mécanique du micropont (collage électrostatique).

Une couche d'isolant **64** est alors déposée sur la couche sacrificielle **112,** puis un film métallique mince **66,** par exemple constitué de Ti, de TiN, de Pt, de NiCr ou autres, est déposée sur la couche d'isolant **64.**

Comme décrit précédemment, le film métallique **66** réalise la fonction d'alimentation électrique et de lecture de l'élément thermométrique **78** via les bras d'isolation thermique **62** et la fonction de charge résistive de part sa surface en contact avec les ailettes **70, 72, 74** et la seconde antenne papillon **68.** Le couche d'isolant **64** et le film mince **66,** chacun d'une épaisseur comprise entre 0,005μm et 0,05μm, sont préférentiellement déposés par PECVD (pour l'expression anglo-saxonne « *Plasma Enhanced Chemical Vapor Deposition* ») ou pulvérisation cathodique, puis gravés chimiquement ou par plasma pour former les bras d'isolation **62.** Le film métallique **66** est également gravé chimiquement ou par plasma pour former une portion centrale **114,** sur laquelle seront formées les ailettes **70, 72, 74** et la seconde antenne **68,** et des portions latérales **116,** qui seront au contact de l'élément thermométrique **78** pour son alimentation et sa lecture.

La résistance par carré du film métallique **66** est avantageusement choisie de manière à réaliser une isolation thermique efficace du micropont **56** par rapport au circuit de lecture **84.** De préférence, la résistance par carré du film métallique **66** est comprise entre 100 Ω/ carré et 500 Ω/carré, car c'est la valeur des résistances d'accès des matériaux utilisés pour améliorer les résistances thermiques (bras du bolomètre). Enfin, le film métallique **66** est connecté au circuit de lecture **84** par l'intermédiaire des clous d'ancrage conducteurs **58,** élaborés au travers de la couche sacrificielles **112** de manière analogue aux connexions **110,** et des connexions électriques **110.**

La seconde antenne **68** et les ailettes **70, 72, 74** sont quant à elles constituées d'un matériau conducteur comme l'aluminium, le siliciure de tungstène, le titane ou autres. Pour leur formation, une couche du matériau conducteur, d'une épaisseur comprise entre 0,1μm à 0,5μm, est déposée sur la portion centrale **114** du film métallique **66** par pulvérisation cathodique ou par décomposition thermique (LPCVD pour l'expression anglosaxonne « *Low Pressure Chemical Vapor Deposition* ») ou la décomposition plasma (PECVD), puis la seconde antenne et les ailettes sont formées par gravure chimique, gravure par plasma ou par une technique du type « lift off » de ladite couche. En variante, l'antenne et les ailettes sont constituées de multicouches métalliques. L'antenne **68** et les ailettes **70, 72, 74** ainsi formées définissent des régions qui convertissent le rayonnement électromagnétique en courant électrique et définissent des zones découvertes du film métallique **66** qui convertissent le courant électrique en énergie thermique.

La seconde antenne **68** et les ailettes **70, 72, 74** sont ensuite recouvertes d'une couche de matériau isolant **76,** tel que du SiN, du SiO, du ZnS ou autres. La couche **76,** d'une épaisseur comprise entre 0,005μm et 0,1μm, est réalisée afin d'éviter tout court circuit entre les ailettes **70, 72, 74** et l'élément thermométrique **78.** La couche **76** est par exemple réalisée à l'aide d'une technique de dépôt basse température telle que la pulvérisation cathodique ou la décomposition plasma (PECVD). La couche **76** est ensuite gravée, par exemple chimiquement ou par plasma, pour faire apparaître les parties latérales **116** du film métallique **66** auxquelles sera connecté l'élément thermométrique **78,** ainsi que les bras d'isolation thermique **62.**

L'élément thermométrique **78** est alors déposé sur la couche **76** et les portions latérales **116** à l'aide par exemple d'une technique de dépôt à basse température telle qu'une pulvérisation. Le matériau constitutif de l'élément thermométrique **78** est par exemple un semi-conducteur amorphe ou polycristallin, tel que du Si, du Ge, du SiC, du a-Si :H, du a-SiGe :H, un matériau métallique ou encore un oxyde de vanadium ou un oxyde de magnétite. Ce matériau doit présenter un coefficient en température (TCR pour « *temperature coefficient resistance* ») non nul. En d'autres termes, il présente une résistance qui varie en fonction de la température.

Enfin, la couche sacrificielle **112** est retirée, la nature de celle-ci déterminant la technique de libération, et de préférence par gravure chimique ou par plasma.

Comme on peut le constater, la gravure des matériaux constitutifs du détecteur selon l'invention est réalisée majoritairement ou exclusivement, par des techniques d'attaque chimique, éventuellement assistées par plasma, ces techniques permettant d'obtenir des gravures précises et reproductibles.

Lorsque la première antenne papillon **54** est située au dessus du micropont **56,** une couche sacrificielle **130** (figure 13) est déposée sur l'ensemble du micropont **56** et de la première couche sacrificielle **112** utilisée pour élaborer celui-ci. Les couches sacrificielles **112, 130** sont alors gravées afin de réaliser les supports **92** de l'antenne **54.** Les supports **92** peuvent par exemple être constitués d'un matériau différent de celui de l'antenne **54,** comme par exemple un matériau isolant déposés par décomposition thermique (LPCVD). Enfin l'antenne papillon **54** est formée par dépôt puis gravure d'une couche conductrice, comme cela a été décrit précédemment, puis les couches sacrificielles éliminées.

Grâce à l'invention, il est ainsi obtenu :

■ un découplage des antennes papillons qui ne sont plus sur le même plan et ne sont plus déposées sur un même support ;
■ une adaptation d'impédance optimale grâce aux ailettes, l'adaptation d'impédance étant en outre réalisée de manière indépendante pour chacune des antennes ;
■ une surface de la charge résistive très faible, réduisant ainsi le couplage du détecteur avec le rayonnement infrarouge qui est en première approximation proportionnel à la surface de charge.

## Revendications

1.  Détecteur bolométrique d'un rayonnement électromagnétique dans le domaine s'étendant de l'infrarouge au térahertz, comprenant :

    ■ une première et une seconde antennes papillon croisées (54, 68), destinées à collecter le rayonnement électromagnétique ;
    ■ une charge résistive (66) couplée auxdites antennes (54, 68) pour convertir la puissance électromagnétique collectée en puissance calorifique ;
    ■ un micropont bolométrique (56) suspendu au dessus d'un substrat (52) par des bras de soutien et d'isolation thermique (62), le micropont comprenant :

        o la charge résistive (66) ;
        o un élément thermométrique (78) couplé à la charge résistive (66) pour s'échauffer sous l'effet de la puissance calorifique produite,

    **caractérisé en ce que** la première antenne (54) est agencée hors du micropont (56) et est en couplage capacitif avec la charge résistive (66), et **en ce que** la seconde antenne (68) est agencée dans le micropont (56) en couplage résistif avec la charge résistive (66).

2.  Détecteur bolométrique selon la revendication 1, **caractérisé en ce que** la charge résistive comporte un film métallique (66) et **en ce que** le micropont (56) comporte des ailettes (70, 72, 74) agencées en regard de la première antenne (54) sur le film métallique (66) de façon à réaliser une adaptation d'impédance entre la première antenne (54) et le film métallique (66).

3.  Détecteur bolométrique selon la revendication 2, **caractérisé en ce que** les ailettes (70, 72, 74) sont recouvertes d'un isolant électrique (76), l'élément thermométrique (78) étant au moins partiellement agencé sur ledit isolant (76) et au moins partiellement au contact avec le film métallique (66).

4.  Détecteur bolométrique selon la revendication 1, 2 ou 3, **caractérisé en ce que** la charge résistive comporte un film métallique (66) et **en ce que** la seconde antenne (68) est agencée au moins partiellement sur ce film métallique (66).

5.  Détecteur bolométrique selon l'une quelconque des revendications précédentes, **caractérisé en ce que** la première antenne (54) est agencée sur le substrat (52).

6.  Détecteur bolométrique selon l'une quelconque des revendications 1 à 3, **caractérisé en ce que** la première antenne (54) est formée au moins partiellement au dessus du micropont (56).

7.  Dispositif de détection matriciel d'un rayonnement électromagnétique dans le domaine s'étendant de l'infrarouge au térahertz, **caractérisé en ce qu'**il comporte une matrice à une ou deux dimensions de détecteurs bolométriques conformes à l'une quelconque des revendications précédentes.

## Claims

1.  A bolometric detector for detecting electromagnetic radiation in the region extending from infrared to terahertz frequencies, comprising:

    ■ a first and a second crossed bow-tie antenna (54, 68) intended to collect electromagnetic radiation;
    ■ a resistive load (66) coupled to said antennas (54, 68) in order to convert the collected electromagnetic power into calorific power;
    ■ a bolometric micro bridge structure (56) suspended above substrate (52) by support and thermal isolation arms (62) with the micro bridge comprising:

        o the resistive load (66);
        o a thermometric element (78) coupled to resistive load (66) so that its temperature can rise due to the effect of the calorific power produced ;

*characterized* **in that** first antenna (54) is located outside the micro bridge (56) and is capacitively coupled with resistive load (66) and **in that** second antenna (68) is located in micro bridge (56) and is resistively coupled with the resistive load (66).

**2.** The bolometric detector as claimed in claim 1, *characterized* **in that** the resistive load comprises metal film (66) and **in that** micro bridge (56) comprises winglets (70, 72, 74) arranged facing first antenna (54) on metal film (66) so as to obtain impedance matching between first antenna (54) and metal film (66).

**3.** The bolometric detector as claimed in claim 2, *characterized* **in that** winglets (70, 72, 74) are covered in an electrically insulating material (76), thermometric element (78) being placed at least partially on said insulator (76) and being at least partially in contact with metal film (66).

**4.** The bolometric detector as claimed in claim 1, 2 or 3, *characterized* **in that** the resistive load comprises metal film (66) and **in that** second antenna (68) is placed at least partially on this metal film (66).

**5.** The bolometric detector as claimed in any of the above claims, *characterized* **in that** first antenna (54) is placed on substrate (52).

**6.** The bolometric detector as claimed in any of claims 1 to 3, *characterized* **in that** first antenna (54) is formed at least partially above the micro bridge (56).

**7.** An array detector device for detecting electromagnetic radiation in the region extending from infrared to terahertz frequencies, *characterized* **in that** it comprises a one or two dimensional array of bolometric detectors in accordance with any of the above claims.

**Patentansprüche**

**1.** Bolometrischer Detektor für elektromagnetische Strahlung in dem Bereich, der sich von Infrarot bis Terahertz erstreckt, Folgendes aufweisend:

> • eine erste und eine zweite Schmetterlingsdrehkreuzantenne (54, 68), die dazu bestimmt sind, die elektromagnetische Strahlung zu erfassen;
> • einen ohmschen Widerstand (66), der an die Antennen (54, 68) angeschlossen ist, um die erfasste elektromagnetische Leistung in Wärmeleistung umzuwandeln;
> • eine bolometrische Mikrobrücke (56), die mittels Halte- und Wärmeisolationsarmen (62) über einem Substrat (52) aufgehängt ist, wobei die Mikrobrücke umfasst:

> o den ohmschen Widerstand (66);
> o ein Wärmemesselement (78), das an den ohmschen Widerstand (66) angeschlossen ist, um sich unter der Wirkung der erzeugten Wärmeleistung zu erwärmen,

**dadurch gekennzeichnet, dass** die erste Antenne (54) außerhalb der Mikrobrücke (56) angeordnet ist und in kapazitiver Kopplung mit dem ohmschen Widerstand (66) steht, und die zweite Antenne (68) in der Mikrobrücke (56) in Widerstandskopplung mit dem ohmschen Widerstand (66) angeordnet ist.

**2.** Bolometrischer Detektor nach Anspruch 1, **dadurch gekennzeichnet, dass** der ohmsche Widerstand eine Metallschicht (66) umfasst, und die Mikrobrücke (56) Flügel (70, 72, 74) umfasst, die der ersten Antenne (54) auf der Metallschicht (66) zugewandt angeordnet sind, um eine Impedanzanpassung zwischen der ersten Antenne (54) und der Metallschicht (66) herzustellen.

**3.** Bolometrischer Detektor nach Anspruch 2, **dadurch gekennzeichnet, dass** die Flügel (70, 72, 74) mit einem elektrischen Isolationsmaterial (76) bedeckt sind, wobei das Wärmemesselement (78) zumindest teilweise auf dem Isolationsmaterial (76) angeordnet ist und zumindest teilweise mit der Metallschicht (66) in Kontakt ist.

**4.** Bolometrischer Detektor nach Anspruch 1, 2 oder 3, **dadurch gekennzeichnet, dass** der ohmsche Widerstand eine Metallschicht (66) umfasst und die zweite Antenne (58) zumindest teilweise auf dieser Metallschicht (66) angeordnet ist.

**5.** Bolometrischer Detektor nach einem der vorhergehenden Ansprüche, **dadurch gekennzeichnet, dass** die erste Antenne (54) auf dem Substrat (52) angeordnet ist.

**6.** Bolometrischer Detektor nach einem der Ansprüche 1 bis 3, **dadurch gekennzeichnet, dass** die erste Antenne (54) zumindest teilweise über der Mikrobrücke (56) ausgebildet ist.

**7.** Matrizenvorrichtung zur Detektion einer elektromagnetischen Strahlung in dem Bereich, der sich von Infrarot bis Terahertz erstreckt, **dadurch gekennzeichnet, dass** sie eine Matrix mit ein- oder zweidimensionaler Anordnung von bolometrischen Detektoren nach einem der vorhergehenden Ansprüche umfasst.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6329655 B

- US 6329649 B

**Littérature non-brevet citée dans la description**

- **Peytavit et al.** *The Joint 30th International Conference on Infrared and Milimeter Waves & 13th Intl. Conf. on Terahertz Electronics,* 19 Septembre 2005, vol. 1, 257-258